# EUROPÄISCHE PATENTSCHRIFT

(11) **EP 3 405 328 B1**
(45) Veröffentlichungstag und Bekanntmachung des Hinweises auf die Patenterteilung: **25.11.2020**
(21) Anmeldenummer: 17713582.9
(22) Anmeldetag: 03.01.2017
(51) Int. Cl.: B29C 55/08

(54) **FOLIENRECKANLAGE ZUM VERHINDERN VON VERSCHMUTZUNGEN INFOLGE SCHMELZENS DER FOLIE SOWIE VERFAHREN ZUM VERHINDERN VON DERARTIGEN VERSCHMUTZUNGEN IN EINER SOLCHEN ANLAGE**
FILM STRETCHING INSTALLATION FOR PREVENTING SOILING DUE TO MELTING OF THE FILM AND METHOD FOR PREVENTING SUCH SOILING IN SUCH AN INSTALLATION
INSTALLATION D'ÉTIRAGE DE FILMS PERMETTANT D'EMPÊCHER LES SALISSURES DUES À LA FUSION DU FILM, ET PROCÉDÉ PERMETTANT D'EMPÊCHER DES SALISSURES DE CE TYPE DANS UNE INSTALLATION DE CE TYPE

(30) Priorität: 21.01.2016 DE 102016200827
(43) Veröffentlichungstag der Anmeldung: 28.11.2018
(73) Patentinhaber: Lindauer Dornier Gesellschaft mit beschränkter Haftung, 88131 Lindau (DE)
(72) Erfinder: RESCH, Karsten, 88138 Weissensberg (DE); TAUTENHAHN, Simone, 88212 Ravensburg (DE); MANGOLD, Herbert, 6912 Hörbranz (AT)
(74) Vertreter: Leske, Thomas
(86) Internationale Anmeldenummer: PCT/EP2017/050044
(87) Internationale Veröffentlichungsnummer: WO 2017/125258

(56) Entgegenhaltungen:
- WO-A1-2009/075166
- GB-A- 647 059
- JP-A- 2010 069 443

## Beschreibung

Die Erfindung betrifft eine Folienreckanlage zum Verhindern von Verschmutzungen infolge Schmelzens der Folie sowie ein Verfahren zum Verhindern von derartigen Verschmutzungen in solchen Anlagen.

Die bekannten Folienreckanlagen dienen dazu, eine zunächst in geschmolzenem Zustand extrudierte Folie auf eine wassergekühlte Walze zu bringen und anschließend durch entsprechende Behandlungszonen einer derartigen Folienreckanlage mit relativ hoher Geschwindigkeit zu führen. Damit die zu verstreckende Folie im entsprechenden Querreckbereich gereckt werden kann, muss die Folie in den Behandlungszonen zunächst erwärmt werden, damit in den eigentlichen Querreckzonen die geeigneten Eigenschaften zum Querrecken vorhanden sind. Dazu wird die Folie in den jeweiligen Behandlungszonen mit einem Behandlungsfluid, insbesondere Heizluft, beaufschlagt. Die Temperatur der Heizluft kann in den einzelnen Behandlungszonen variieren, wird jedoch so gewählt, dass ein Schmelzen der Folie beim Durchlauf verhindert wird. Die Temperatur des Heizmediums kann in Abhängigkeit von dem Material der Folie wegen der hohen Durchlaufgeschwindigkeit der Folie durch die Anlage relativ hoch gewählt werden, damit die für ein Querrecken erforderlichen Temperaturen bzw. die für ein Querrecken erforderlichen Eigenschaften der Folie gewährleistet sind.

Auch wenn dies zu vermeiden ist, treten im Betrieb gelegentliche Folienabrisse auf, welche zum Stillstand der Anlage führen, weil die abgerissenen Folienteile aus der Anlage entfernt werden müssen, bevor die Anlage wieder in Betrieb gesetzt werden kann. Aufgrund der relativ hohen Temperaturen in den jeweiligen Behandlungszonen kann es dabei zum Schmelzen der Folie kommen. Das Schmelzen der Folie kann vor allem am Ende des Aufheizbereiches und am Eintritt in den Querreckbereich der Anlage auftreten, weil dort die Folie schon relativ lange in den davorliegenden Behandlungszonen zum Aufheizen dem Heizmedium ausgesetzt worden ist.

Das Problem des Schmelzens der Folie tritt vor allen Dingen bei Anlagen für Folien auf, welche relativ nahe am jeweiligen Schmelzpunkt der Folie verstreckt werden. Dazu zählen beispielsweise Polyolefin-Folien und dabei insbesondere Polypropylen-Folien.

Bisher sind eine Reihe von Entwicklungen vorgenommen worden, das Schmelzen der Folien zu begrenzen bzw. einzudämmen, ohne dass jedoch der erforderliche Reinigungsaufwand insbesondere an den Düsen bzw. Düsenbereichen in den jeweiligen Behandlungszonen nennenswert vermindert werden konnte.

Die Entwicklung ist vor allen Dingen darauf gerichtet worden, eine optimale Beaufschlagung der Folie bei ihrem Durchlauf durch die jeweiligen Behandlungszonen mit Behandlungsfluid zu erreichen, indem die Düsenbereiche bezüglich Größe und Anordnung optimierte Anordnungen von einzelnen Düsen aufweisen. Dies ist beispielsweise in EP 2 123 247 A1 beschrieben.

In DE 196 23 471 C1 und DE 10 2009 060 753 A1 sind Belüftungsdüsen für Folienreckanlagen beschrieben. Damit eine möglichst gleichförmige Verteilung bzw. gleichmäßige Austrittsgeschwindigkeit des zugeführten Behandlungsmediums über die gesamte Düsenkastenlänge gewährleistet wird, sind für die Belüftungsdüsen eine Verteilkammer und eine Zuführkammer vorgesehen. Zwischen beiden ist eine weitere Kammer vorgesehen mit einer entsprechenden Überström-Anordnung, um eine gleichmäßige Beaufschlagung aller Düsen zu gewährleisten. Über eine derartige Kammeranordnung soll die Einstellung eines gewünschten Temperaturprofils quer zur Warenbahn auch möglich sein.

Des Weiteren ist in G 92 13 802.0 eine Abschottungsvorrichtung beschrieben, welche dazu dient, die in den einzelnen Behandlungszonen gegebenenfalls vorhandenen unterschiedlichen Behandlungstemperaturen weitestgehend ohne Beeinflussung auf nachfolgende Behandlungszonen abzuschirmen. Dazu ist eine Abschottvorrichtung vorgesehen, welche den Auslaufspalt für die Folienbahn beim Übergang von einer Behandlungszone zur nächsten verringert, so dass der Austausch von Luft, Gasen oder Kondensaten zwischen den einzelnen Behandlungszonen verringerbar sein soll.

In US 2015 0048548 A1 ist eine Folienschrägreckanlage beschrieben, bei welcher die Zufuhr von Behandlungsfluid in gewissen Grenzen mittels einer Abschirmplatte reguliert werden kann, so dass nicht immer die maximal mögliche Menge an Behandlungsfluid zur zu behandelnden Folie geleitet wird. Bei einem Maschinenstopp oder havariebestimmten Stillstand der Anlage wird die zu behandelnde Folie weiterhin mit Behandlungsfluid beaufschlagt, so dass insbesondere bei Polyolefin- oder Polypropylen-Folien die Folie rasch eine derartige Wärmezufuhr erhält, dass diese schmilzt und mangels einer Abdeckvorrichtung über den Düsen diese Düsen verschmutzt, was mit einem hohen Reinigungsbedarf verbunden ist.

In JP 2010069443 A ist eine Vorrichtung zum Trocknen einer Beschichtungsfolie sowie eines durch diese gebildete optische Folie beschrieben. Die zu trocknende Folie wird auf einem bandförmigen Träger geführt, über welchem eine als Düsenplatte ausgebildete poröse Platte angeordnet ist, durch welche das Behandlungsfluid beaufschlagt wird. Auf der der zur behandelnden Folie abgewandten Seite der porösen Platte sind Abschirmplatten an den seitlichen Rändern vorgesehen, durch welche die Seitenbereiche der Folie weniger mit von einem zentralen Behandlungsfluidspeicher zugeführtem Behandlungsfluid beaufschlagt werden, bei welchem jedoch der gesamte Mittelbereich der Folie stets mit Behandlungsfluid beaufschlagt wird. Das bedeutet, dass bei einem Maschinenstopp oder einer havariebedingten Abschaltung der Anlage Behandlungsfluid weiter auf die zu behandelnde Folie geleitet wird. Dadurch kann in einem solchen Fall die Folie schmelzen und kann den sie tragenden Träger verschmutzen. Außerdem handelt es sich bei dieser bekannten Anlage nicht um eine Folienreckanlage Eine weitere gattungsgemäße Folienreckanlage ist in GB647059 offenbart.

Das Problem des Schmelzens von Folie bei Havarien von Anlagen und damit bei deren Stillstand ist bei den bekannten Folienreckanlagen nicht thematisiert.

Und schließlich ist in DE9101377U1 (Rollennummer G9101377.1) eine Schnellentlüftung für Trockner vorgesehen, welche steuerbare Klappen oder in die Trocknerwände eingebaute Abzugsrohre vorsieht, damit bei einer Havarie einer Anlage die Heißluft aus den Behandlungszonen rasch abgeführt werden kann, damit diese rasch durch das Personal betreten werden können. Zwar dient diese Schnellentlüftung dazu, die Heißluft aus der jeweiligen Behandlungszone gezielt abzuführen, die Zeiten, innerhalb welcher die in den Anlagen behandelten Folien zu schmelzen beginnen, sind jedoch für solche Folien, deren Recktemperaturen nahe der Schmelztemperatur der Folie liegen, mit ca. 30 bis 40 Sekunden relativ kurz. Die Schnellentlüftungsvorrichtung gemäß der bekannten Folienreckanlage kann deshalb nicht dafür Sorge tragen, ein Schmelzen der Folie zu verhindern, weil die Zufuhr von Behandlungsfluid weiterhin erfolgt. Außerdem liegt die Temperatur der Umgebung der Folie deutlich über dem für das Schmelzen kritischen Temperaturbereich, so dass durch die Umgebungswärme sogar noch eine Temperaturerhöhung, wenn auch langsamer, erfolgt.

Wenn die Folie infolge des Stillstands der Anlage zu schmelzen beginnt, so tropft oder fällt die geschmolzene Folie vor allen Dingen in den Düsenbereich.

Es ist daher bereits auch versucht worden, den Düsenbereich der Düsenblöcke mit einer Antihaftbeschichtung zu versehen, damit auf die Düsenbereiche fallende geschmolzene Folie gegebenenfalls leichter entfernt werden kann. Das Entfernen geschmolzener Folie aus dem Düsenbereich gestaltet sich dennoch als recht schwierig und aufwendig, weil die geschmolzene Folie auch in die Düsen unmittelbar hineinläuft und auf der Innenseite der Düsenbleche nach dem Abkühlen und Erstarren nur noch mit größerem, auch mit einer Demontage gewisser Teile der Düsenblöcke verbundenem Aufwand entfernt werden kann. Ein derartiger hoher Aufwand führt zu relativ langen Stillstandszeiten dieser Anlagen und damit zu Verlusten, die den gesamten Herstellungsprozess nicht so effektiv machen, wie das vom Betreiber derartiger Anlagen gewünscht wird.

Es ist daher die Aufgabe der vorliegenden Erfindung, eine Vorrichtung und ein Verfahren bereitzustellen, mit welchen verhindert werden kann, dass beim Stillsetzen bzw. bei Stillstand einer Folienreckanlage gegebenenfalls doch geschmolzene Folie in den Düsenbereich gelangt, so dass der Reinigungsaufwand nicht nur verringert werden, sondern gegebenfalls auch automatisch und auch in kürzerer Zeit ablaufen kann, und mit welchen einem Bediener mehr Zeit verschafft werden kann, die Anlage nach einem insbesondere havariebedingten Stopp rascher wieder in den Betriebsmodus zu überführen.

Diese Aufgabe wird durch eine Folienreckanlage mit den Merkmalen gemäß Anspruch 1 sowie durch ein Verfahren mit den Merkmalen gemäß Anspruch 15 gelöst. Zweckmäßige Weiterbildungen der Folienreckanlage sind in den abhängigen Ansprüchen definiert.

Die erfindungsgemäße Folienreckanlage weist in üblicher Bauart mehrere hintereinander geschaltete Behandlungszonen zum Aufheizen und/oder Verstrecken in Querrichtung einer zu behandelnden Folie auf. Die auf eine Walze extrudierte geschmolzene Folienmasse gelangt nach einer Wasserkühlung in die zum Aufheizen vorgesehenen Behandlungszonen der eigentlichen Folienreckanlage, woran sich Behandlungszonen zum Verstrecken anschließen, welcher Bereich auch als Querreckbereich bezeichnet wird. Daran schließen sich weitere Behandlungszonen einer kompletten Folienreckanlage an wie z. B. Fixierung, Oberflächenbehandlung der Folie etc., welche für die vorliegende Erfindung nicht maßgeblich sind und daher hier auch nicht weiter ausgeführt werden.

Damit die zu reckende Folie im Querreckbereich eine zum Recken ausreichend hohe Temperatur aufweist, wird sie zunächst durch als Aufheizzonen ausgebildete Behandlungszonen geführt. In diesen Zonen wird die Folie mit einem Behandlungsfluid, vorzugsweise Heizluft, beaufschlagt. Die Heizluft wird über eine Mehrzahl von Düsen umfassende jeweilige Düsenbereiche auf die Folienbahn gerichtet, und zwar bis zu einer Temperatur, welche es ermöglicht, dass die Folienbahn schnellstmöglich gereckt werden kann, aber nicht reißt. Aufgrund der Tatsache, dass es im Laufe des Betriebs einer Folienreckanlage doch gelegentlich zu einem Reißen der Folie kommen kann, muss Sorge dafür getragen sein, dass insbesondere im Falle einer derartigen Havarie bzw. eines damit verbundenen Maschinenstopps die Behandlungszonen möglichst rasch heruntergekühlt werden können, damit bei stehender Anlage wegen der relativ hohen Temperaturen in den Behandlungszonen ein Schmelzen der Folie vermieden werden kann oder zumindest eingeschränkt werden kann.

Das Problem mit dem Schmelzen der Folie tritt vorrangig bei Anlagen zur Verarbeitung von Folien aus Polyolefinen und insbesondere aus Polypropylen auf. Die vorliegende Folienreckanlage ist insbesondere für derartige Folien vorgesehen. Sie ist jedoch auch für alle solche Folienmaterialen geeignet und vorgesehen, bei welchen die Recktemperatur relativ nahe am Folienschmelzpunkt liegt. Wenn die Temperaturdifferenz zwischen der Recktemperatur und der Schmelztemperatur der zu verarbeiteten Folie relativ groß ist, wie das beispielsweise bei Polyester der Fall ist, spielt das Problem des Schmelzens der Folie beim Stillstand der Anlage keine oder nur eine sehr untergeordnete Rolle.

Erfindungsgemäß ist nun vorgesehen, dass die Behandlungszonen zum Aufheizen und/oder Verstrecken eine Abschottvorrichtung aufweisen, welche insbesondere auf Basis eines Signals zwischen die Folien und die Düsen bzw. den Düsenbereich zu deren bzw. zu dessen Abdeckung und/oder Abschottung einer Beaufschlagung der Folie mit dem Behandlungsfluid bewegbar ist. Das bedeutet, dass die Abschottvorrichtung so zwischen die Folie und die Düsen bzw. den Düsenbereich bewegbar ist, dass diese bzw. dieser entsprechend abgedeckt ist und eine Beaufschlagung der Folie mit dem Behandlungsfluid abgeschottet ist. Die Düsen müssen dabei nicht komplett und fest abgedeckt sein. Vielmehr reicht es, wenn die Abschottvorrichtung so zwischen die Düsen und die Folie hineinbewegt wird, dass die Zufuhr von Behandlungsfluid auf die Folie abgeschottet ist. Damit kann erreicht werden, dass das Behandlungsfluid, welches im Wesentlichen dem Aufheizen der Folie zum Zwecke des Reckens in den nachfolgenden Querreck-Behandlungszonen dient, die Folie nicht weiter aufheizt. Damit kann zumindest verhindert werden, dass die Temperaturdifferenz zwischen der Temperatur der Folie und ihrem Schmelzpunkt sich weiter verringert, so dass ein Schmelzen der Folie zumindest minimiert werden kann. Mit dem Abschotten der Zufuhr von Behandlungsfluid an die Folie wird also die Wärmezufuhr zur Folie verringert, so dass die Zeit bis zum Schmelzen der Folie verlängert wird und so dem Bediener mehr Zeit verschafft wird, die Anlage nach einem Havariefall wieder in Betrieb zu setzen.

Da die Abschottvorrichtung vorzugsweise ein in sich geschlossenes Flächenelement ist, kann herabtropfende geschmolzene Folie auch nicht in die Düsenöffnungen gelangen und bei Temperaturabsenkungen infolge Abschaltung der Anlage dort erstarren. Auf einer glatten geschlossenen Fläche des erfindungsgemäßen Flächenelementes kann die vom Flächenelement aufgenommene Menge an geschmolzener Folie auch wesentlich leichter und damit in wesentlich kürzerer Zeit wieder entfernt werden, so dass die Flächenelemente nicht nur wiederverwendbar sind, sondern auch der Stillstand der erfindungsgemäßen Folienreckanlage infolge Reinigungsaufwand zeitlich deutlich verringert werden kann.

Die Abschottvorrichtung ist aus einer Parkposition, in welcher die Abschottvorrichtung im Bereich neben der durch die Behandlungszonen laufenden Folienbahn angeordnet ist und in welcher das Behandlungsfluid von den Düsen ungehindert auf die Folie trifft, welches sich also an der Seite der eigentlichen Behandlungszonen für die Folie befindet, in eine Abschottposition bewegbar, in welcher das Behandlungsfluid von der Folie abgeschottet ist und gegebenenfalls geschmolzene Folie auffängt. Die Abschottvorrichtung wird also zwischen den Düsenbereich und die Folie bewegt.

Bei einer üblichen Folienreckanlage wird die Folie aus sowohl unterhalb der Folie also auch oberhalb der Folie angeordneten Düsen mit Behandlungsfluid bzw. Heizmedium beaufschlagt. Vorzugsweise ist vorgesehen, dass die Abschottvorrichtung nur zwischen den Düsenbereich unterhalb der Folie und der Unterseite der Folie eingefahren wird. Unter Einfahren ist das Einschieben bzw. Hineinbewegen in den Zwischenraum zwischen Folie und Düsenbereich zu verstehen. Vorzugsweise wird das Flächenelement beim Einschieben auf den Düsenbereich abgelegt. Es ist jedoch auch möglich, dass mit entsprechenden Führungseinrichtungen das Flächenelement in geringem Abstand oberhalb der Düsen angeordnet sein kann.

Eine vorzugsweise Anordnung der Abschottvorrichtung ist jedoch jene, bei welcher die Abschottvorrichtung aufgrund ihres Eigengewichts auf den Düsen liegt und diese weitestgehend abdichtet. Dies ist unter anderem auch deshalb relativ leicht zu bewerkstelligen, weil der Druck des Behandlungsfluids, mit welchem dieses aus den Düsen ausströmt, relativ gering ist und vorzugsweise je nach Anwendungsfall in einer Größenordnung von ca. 150 bis 1000 Pa liegt.

Vorzugsweise ist die Abschottvorrichtung flexibel ausgebildet, d. h. sie ist derart ausgebildet, dass sie auf- und abwickelbar ist. In der Parkposition findet sich die Abschottvorrichtung in einem aufgewickelten Zustand und kann durch Abwickeln in die Abschottposition gebracht werden. Als Abschottvorrichtung bzw. als Flächenelement der Abschottvorrichtung kommen daher insbesondere Gewebe mit einer guten Flexibilität, Stabilität und Antihafteigenschaft, dünne Bleche oder auch für die entsprechenden Behandlungstemperaturen schmelzbeständige Kunststoffe oder auch Papiermaterialen mit derartigen Eigenschaften in Frage.

Gemäß einer Weiterbildung ist die Abschottvorrichtung quer zur Durchlaufrichtung der Folie in ihre Abschottposition bewegbar. Das bedeutet, die Abschottvorrichtung wird von ihrer Parkposition von den seitlichen Bereichen neben der durch die einzelnen Behandlungszonen laufenden Folienbahn über die Düsen der Düsenbereiche bewegt. Es ist jedoch auch möglich, dass die Abschottvorrichtung längs zur Durchlaufrichtung der Folie in ihre Abschottposition bewegbar ist. In beiden Fällen ist vorzugsweise vorgesehen, dass die Abschottvorrichtung eine solche Größe aufweist, dass mehrere Düsenblöcke von ein und demselben Flächenelement abdeckbar sind, wobei in der Regel je 4, 6 oder 8 Düsen einen Düsenblock bilden und zwischen benachbarten Düsenblöcken ein Gang vorgesehen ist. Die Abschottvorrichtung kann daher auch so ausgebildet sein, dass zwar die jeweiligen Düsenblöcke abgedeckt sind, die dazwischenliegenden Gänge aber freigehalten werden.

Vorzugsweise ist es auch möglich, dass die Abschottvorrichtung aus zwei Teilen besteht, wobei die beiden Teile von beiden Seiten des Düsenbereichs aus der Parkposition heraus zu dessen Mitte zum Zwecke des Abschottens bewegbar sind. Die beiden Teile der Abschottvorrichtung werden dabei so aufeinanderzubewegt, dass sie sich in der Mitte bündig berühren, wobei weiter vorzugsweise eine spezielle Kantengestaltung der sich berührenden Kanten der beiden Teile der Abschottvorrichtung vorgesehen sein kann, gemäß welcher das eine Teil das andere übergreift, um einen Spalt zwischen den beiden Teilen der Abschottvorrichtung zu vermeiden.

Da Düsen sowohl unter der Folienbahn als auch über der Folienbahn in den einzelnen Behandlungszonen in der Regel angeordnet sind, ist weiter vorzugsweise die Abschottvorrichtung als eine Doppelanordnung ausgebildet, welche in ihrer Abschottposition zwischen in der jeweiligen Behandlungszone unter der Folie angeordneten ersten Düsen und der Unterseite der Folie und zwischen in der jeweiligen Behandlungszone oberhalb der Folie angeordneten zweiten Düsen und der Folienoberseite angeordnet. Dabei kann vorgesehen sein, dass die Abschottvorrichtung, welche sich unter der Folie befindet, auf den Düsen aufliegend ist, während die Abschottvorrichtung auf der Oberseite der Folienbahn mit einer speziellen Führungsvorrichtung versehen ist, so dass auch auf der Oberseite die Abdeckvorrichtung die Düsen abschottet, d. h. ausreichend dicht verschließt, so dass sowohl von der Unterseite als auch von der Oberseite eine Zufuhr an Behandlungsfluid zu den jeweiligen Seiten der Folie unterbrochen ist. Diese Doppelanordnung kann dabei einteilig sein, d. h. eine Größe aufweisen, welche es ermöglicht, dass die Abschottvorrichtung von einer Seite der Behandlungszone bis komplett über den gesamten Düsenbereich in der jeweiligen Behandlungszone geführt werden kann. Es versteht sich, dass die Doppelanordnung auch geteilt ausgebildet sein kann, so dass von jeder Seite der Behandlungszone ein jeweiliger Teil der Abschottvorrichtung aufeinanderzu bis zur Mitte der Behandlungszone geführt werden kann, in welcher die aufeinanderzugewandten Kanten des oberen Teils wie auch des unteren Teils der Abschottvorrichtung bündig aneinanderliegen und mit einer geeigneten Dichtvorrichtung der Spalt jeweils verschlossen ist oder speziell ausgebildete Kantendichtleisten aufweisen.

Vorzugsweise ist die Abschottvorrichtung als ein Flächenelement aus Blech und weiter vorzugsweise aus Stahlblech ausgebildet. Vorzugsweise ist die Abschottvorrichtung als ein Flächenelement aus flexiblem Material und weiter vorzugsweise aus wärmebeständigem, stabilem, Antihafteigenschaften aufweisendem Gewebe ausgeführt.

Um die Temperaturen in den jeweiligen Behandlungszonen möglichst rasch abzusenken und damit ein Schmelzen der Folienbahn bei stillstehender Maschine zu vermeiden oder weitgehend zu minimieren, ist in einer den Düsen Behandlungsfluid zuführenden Zuleitung eine Absperrklappe vorgesehen, welche auf Basis eines einer Anlagenhavarie oder eines Anlagenstopps entsprechenden Signals aus ihrer geöffneten Position in eine Sperrposition steuerbar ist. In der Sperrposition ist die Zufuhr von Behandlungsfluid zusätzlich unterbrochen. Dies kann beispielsweise von Vorteil sein, wenn im Bereich unterhalb der Folie eine Abschottvorrichtung zum Abdecken der Düsen der einzelnen Düsenbereiche der Düsenblöcke vorgesehen ist und aus Gründen einer Vereinfachung der Konstruktion auf eine solche Abschottvorrichtung im Bereich oberhalb der Folienbahn verzichtet worden ist, dafür aber die Zufuhr an Behandlungsfluid aus diesen Düsen auf die Folie durch die Absperrklappe unterbindet. Mit einer solchen Kombination ist die Wärmezufuhr von unten an die Folie wie auch von oben auf die Folie unterbunden.

Vorzugsweise ist die Abschottvorrichtung auf Basis des Signals automatisch in ihre Abschottposition bewegbar. Selbstverständlich ist es auch möglich, dass die Bewegung der Abschottvorrichtung beispielsweise vom Bediener der Anlage individuell ausgelöst wird. Ebenso ist es möglich, dass die Abschottposition nach Beendigung der Reinigungsarbeiten unmittelbar vor dem Wiederanfahren der Anlage entweder automatisch oder manuell in die jeweilige Parkposition wieder zurückgefahren wird.

Sofern ein Schmelzen der Folie trotz aller Vorkehrungen zur Unterbrechung der Wärmezufuhr zur Folie bei stillstehender Anlage auftreten sollte, ist die Oberfläche der Abschottvorrichtung zumindest im Bereich der der Folie zugewandten Seite an der Bauteiloberfläche mittels einer glatten, teflonisierten Beschichtung versehen, so dass gegebenenfalls geschmolzene Folie daran allenfalls gering haftet. Unter "allenfalls gering Haften" ist zu verstehen, dass die Folie sehr leicht abgereinigt werden kann. Es soll jedoch auch der Fall umfasst sein, dass die Folie nur eine solch geringe Haftung an der Oberfläche hat, dass sie ohne größeren Kraftaufwand und ohne zusätzliche Hilfsmittel von der Abschottvorrichtung entnommen werden kann.

Insbesondere für das vorzugsweise Ausführungsbeispiel, gemäß welchem die Abschottvorrichtung flexibel und aufwickelbar ist, um aus der Abschottposition in die Parkposition gebracht zu werden bzw. aus der Parkposition wieder in die Abschottposition bewegt zu werden, ist die Abschottvorrichtung in Form eines Flächenelementes als ein antihaftbeschichtetes wickelbares Trägergewebe oder eine wärmebeständige Trägerfolie ausgebildet, deren Schmelzpunkt deutlich über dem Schmelzpunkt der in der erfindungsgemäßen Folienreckanlage bearbeiteten Folie liegt. Damit ist sichergestellt, dass geschmolzene Folie keine innige Verbindung mit dem Trägergewebe oder der Trägerfolie eingeht und ein leichtes Lösen der geschmolzenen Folienbestandteile vom Trägergewebe oder von der Trägerfolie möglich ist. Vorzugsweise ist für das flexible Trägergewebe oder die flexible Trägerfolie, welche durch Aufwickeln in ihre Parkposition verbringbar sind, eine Abstreifvorrichtung vorgesehen, mittels welcher gegebenenfalls vom Trägergewebe oder von der Trägerfolie aufgenommene geschmolzene Folienbestandteile vor dem Aufwickeln leicht abstreifbar sind, so dass das Trägergewebe oder die Trägerfolie wiederverwendbar ist. Zur Bewegung der Abschottvorrichtung aus ihrer Parkposition in die Abschottposition und umgekehrt sind vorzugsweise gesteuerte Antriebe vorgesehen. Diese Antriebe sind vorzugsweise auf Basis des Signals einer Havarie der Anlage oder eines Anlagenstopps gesteuert, sie können jedoch auch insgesamt manuell von einem Bediener ausgelöst werden, beispielsweise nach Beendigung der erforderlichen Reinigungsarbeiten kurz vor dem Wiederanfahren einer Anlage.

Es versteht sich, dass auch ein Trägergewebe oder eine Trägerfolie verwendbar sind, welche die geschmolzene Folie aufnehmen und nach Beendigung des Abschottvorganges nicht nur in die Parkposition gezogen bzw. verbracht werden, sondern komplett mit dem Trägergewebe oder der Trägerfolie einer Entsorgung zugeführt werden. Dies kann beispielsweise dadurch realisiert werden, dass in der Parkposition Folie in der Art einer Warenbahn oder Rolle in größerer Menge vorgehalten wird, wovon für jeden neuen Abschottvorgang eine entsprechende Menge an Trägergewebe oder Trägerfolie abgezogen werden kann. Nach Aufbrauchen der Rolle muss dann lediglich eine neue Rolle in der Maschine vorgesehen werden. In diesem Fall ist eine entsprechende Schneidvorrichtung zum Längs- und Querschneiden der Trägerfolie bzw. des Trägergewebes erforderlich, welche an sich bekannt ist.

Vorzugsweise sind in der Folienreckanlage in den einzelnen Behandlungszonen Öffnungen vorgesehen, welche auf ein einen Maschinenstopp oder eine Anlagenhavarie kennzeichnendes Signal hin geöffnet werden können, damit das Behandlungsfluid rasch aus den Behandlungszonen abgeführt werden kann, damit die Temperatur in den Behandlungszonen möglichst rasch sinkt und dadurch auch ein Schmelzen der Folie teilweise unterbunden werden kann.

Vorzugsweise ist in einer Zuleitung für Behandlungsfluid zu den Düsen eine Absperrklappe vorgesehen. Diese Absperrklappe dient dazu, die Zufuhr von Behandlungsfluid zu den Düsen zusätzlich zu der Abschottvorrichtung zu unterbrechen. Diese Absperrklappe ist vor allen Dingen für die Zuleitungen zu den Düsen bzw. zu den Düsenblöcken, welche im Bereich oberhalb der Folie angeordnet sind, sinnvoll. Bei Vorhandensein der Absperrklappe kann nämlich vorzugsweise auf die Abschottvorrichtung im Bereich zwischen dem oberen Düsenblock und der Folie gegebenenfalls verzichtet werden, weil geschmolzenes Folienmaterial nach unten tropft und daher die oberen Düsen nicht verschmutzen kann. Das heruntergetropfte Folienmaterial wird von der unteren Abschottvorrichtung in der beschriebenen Art und Weise aufgenommen und entfernt. In der Kombination von Absperrklappe und entsprechend gestalteter Abschottvorrichtung ist somit eine besonders vorteilhafte erfindungsgemäße Gestaltung gegeben.

Gemäß einem weiteren Aspekt der Erfindung wird ein Verfahren zum Verhindern von Verschmutzungen von Düsenbereichen für Behandlungsfluid von Folien in Folienreckanlagen infolge des Schmelzens der Folie vorgesehen. Erfindungsgemäß werden dabei bei Stillstand der Folienreckanlage die Düsen aufweisenden Düsenbereiche so abgedeckt, dass die Folien zumindest an einer ihrer Seiten, d. h. entweder an der Oberseite oder an der Unterseite, nicht mit Behandlungsfluid aus Düsen der Düsenbereiche beaufschlagt werden. Das Nichtbeaufschlagen der Folie mit Behandlungsfluid dient dem Unterbrechen der Wärmezufuhr in die Folie und damit der weiteren Verlangsamung einer Erhöhung der Temperatur der Folie, so dass ihr Schmelzen und damit das Verschmutzen der Anlage mit der Folge eines erheblichen Reinigungsaufwandes hinausgezögert werden kann.

Die Abschottvorrichtungen gemäß der Erfindung sind vorzugsweise so ausgebildet, dass beispielsweise ein Vierer-, ein Sechser- oder ein Achterblock von einer einzigen Abschottvorrichtung abdeckbar sind. Unter "Vierer-, Sechser- oder Achterblocck" ist dabei zu verstehen, dass vier, sechs oder acht Düsen zu einem Düsenblock zusammengefasst sind, welche dann von einer Abschottvorrichtung abdeckbar sind. Dazwischen sind aus Gründen der Handhabbarkeit der Gesamtanlage in der Regel Gänge vorgesehen.

Für die vorgesehenen Folienmaterialien, deren Recktemperatur relativ nahe an ihrer Schmelztemperatur liegen, hat das Behandlungsfluid, insbesondere beispielsweise im Falle von Polypropylenfolienmaterial eine Temperatur von 160 - 180 °C. Vorzugsweise ist es neben dem automatischen Überführen der Abschottvorrichtung aus ihrer Parkposition in die Abschottposition auch möglich, dass nach einer gesetzten Zeit die Abschottvorrichtung automatisch in die Parkposition zurückgeführt wird.

Die sich durch ein automatisches Überführen der Abschottvorrichtung in ihre Parkposition ergebende längere Zeit wird vorzugsweise derart festgelegt, dass ein Schmelzen der Folie nicht auftritt. Wird diese Zeit überschritten, muss vom Schmelzen der Folie ausgegangen werden, so dass der Bediener der Anlage die Abschottvorrichtung manuell in die Parkposition verbringen muss. Dies trifft auf Abschottvorrichtungen in Form von Blechen wie auch auf wiederverwendbare Trägerfolien oder antihaftbeschichtetes Gewebe zu. Bei nicht wiederverwendbaren Trägerfolien oder Geweben kann die Abschottvorrichtung zeitunabhängig in ihre Parkposition verbracht werden, da geschmolzene Folie nicht entfernt werden muss.

Weitere Vorteile, Details und Anwendungsmöglichkeiten sind in der nachfolgenden Zeichnung dargestellt. In der Zeichnung zeigen:
- Fig. 1: eine Draufsicht eines Teils einer Folienreckanlage mit den ersten 15 Behandlungszonen einer erfindungsgemäßen Folienreckanlage;
- Fig. 2: eine Schnittansicht einer Anlage gemäß Figur 1 durch den Anordnungsbereich für Abschottvorrichtungen;
- Fig. 3: eine prinzipielle Schaltungsansicht der Versorgung der Düsen mit Behandlungsfluid;
- Fig. 4: einen Vierer-Düsenblock mit einer Abschottvorrichtung gemäß einem ersten Ausführungsbeispiel in Parkposition;
- Fig. 5: das Ausführungsbeispiel der Abschottvorrichung gemäß Figur 4 in Abschottposition;
- Fig. 6: einen Vierer-Düsenblock mit einer Abschottvorrichtung gemäß einem zweiten Ausführungsbeispiel in Parkposition;
- Fig. 7: das Ausführungsbeispiel der Abschottvorrichtung gemäß Figur 6 in Abschottposition;
- Fig. 8: eine dreidimensionale Ansicht des Querschnittes durch einen Vierer-Düsenblock gemäß dem zweiten Ausführungsbeispiel;
- Fig. 9: eine Dichtleiste einer Abschottvorrichtung gemäß dem ersten Ausführungsbeispiel in Abschottposition; und
- Fig. 10: eine prinzipielle Querschnittsansicht durch einen Düsenblock mit einer Abschottvorrichtung gemäß dem ersten Ausführungsbeispiel.

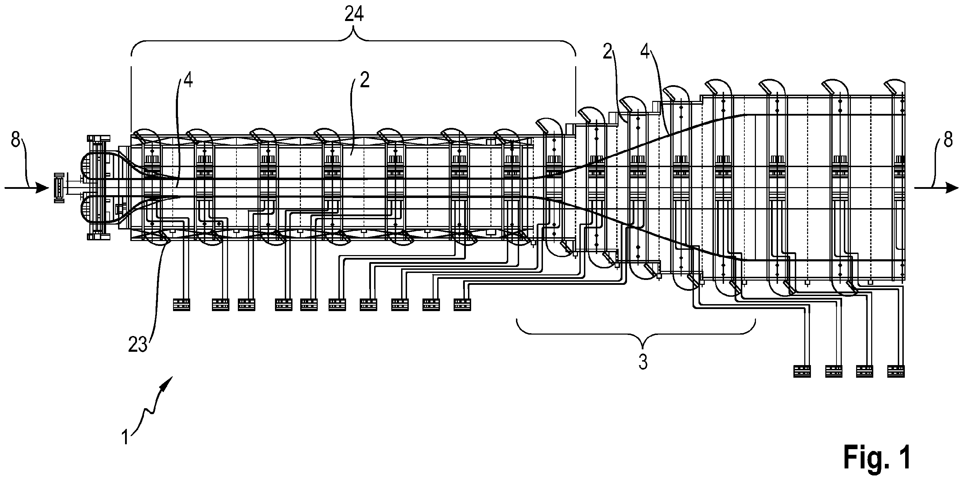

In Figur 1 ist in Draufsicht in prinzipieller Darstellung ein Teil einer erfindungsgemäßen Folienreckanlage mit den ersten 15 aufeinanderfolgenden Behandlungszonen 2 gezeigt. Die Folienreckanlage 1 weist einen nicht bezeichneten Einlaufbereich einer zu behandelnden, d. h. zu reckenden, Folie 4 auf, welcher auf der linken Seite im Sinne eines Folieneinlaufs in die Folienreckanlage 1 dargestellt ist. Die ersten sieben Behandlungszonen 2 dienen der Erwärmung der Folie derart, dass sie in den sich daran anschließenden weiteren fünf Behandlungszonen 2 zuverlässig gereckt werden kann, und zwar möglichst ohne dass die Folie beim Recken reißt.

Bei dem dargestellten Ausführungsbeispiel erstreckt sich ein Anordnungsbereich 24 für Abschottvorrichtungen 9 über die ersten acht Behandlungszonen. Dies sind die Vorwärmzonen sowie die erste Zone für eine beginnende Querreckung. Der Anordnungsbereich 24 für Abschottvorrichtungen 9 erstreckt sich dabei über einen solchen Bereich, in welchem das Vorsehen von Abschottvorrichtungen 9 sinnvoll ist. Die Behandlungszonen 2, in welchen die Querreckung der Folie 4 erfolgt, erstrecken sich über einen Querreckbereich 3. Die Folie 4 läuft in einer Durchlaufrichtung 8 durch die Folienreckanlage 1. Zusätzlich sind Türen 23 vorhanden, durch welche beim manuellen Öffnen durch einen Bediener im Harvariefall Frischluft in die Anlage eingelassen werden kann. Dies ist vor allen Dingen in Havariefällen oder bei Wartungsaufgaben erforderlich, weil dadurch die Temperaturen in den Behandlungszonen 2 relativ rasch auf ein verträgliches Maß für die Reparatur- oder Wartungsarbeiten ausführende Personen abgesenkt werden können. Die zusätzlich eingezeichneten Versorgungsleitungen für Behandlungsfluid 7 sind nicht näher bezeichnet; sie entsprechen dem allgemeinen bekannten Aufbau derartiger Anlagen.

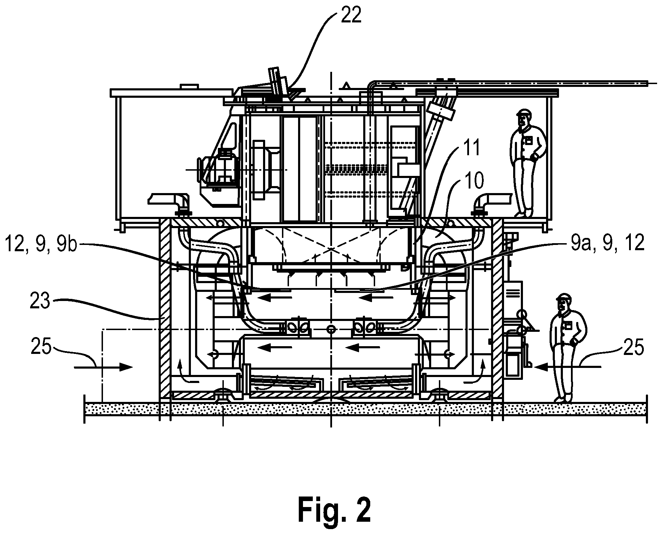

In Figur 2 ist eine prinzipielle Schnittansicht durch eine im Anordnungsbereich 24 für Abschottvorrichtungen 9 vorhandene Behandlungszone 2 dargestellt, in welcher eine erfindungsgemäße Abschottvorrichtung 9 gemäß einem ersten Ausführungsbeispiel in Form eines als Blech 12 ausgebildeten Flächenelementes in Parkposition 9b, welche bezogen auf die senkrechte Mittellinie auf der linken Seite der Zeichnung dargestellt ist, und in Abschottposition 9a gezeigt ist, welche auf der von der senkrechten Mittellinie aus rechten Seite der Zeichnung in prinzipieller Anordnung dargestellt ist. In der Abschottposition 9a deckt die Abschottvorrichung 9 einen Düsenbereich für Behandlungsfluid (hier nicht näher bezeichnet) zur Unterbrechung der direkten Beaufschlagung der Folie 4 mit Behandlungsfluid ab. Im Bereich der Zuleitung 10 für Behandlungsfluid ist eine Absperrklappe 11 vorgesehen, welche zusätzlich die Zufuhr von Behandlungsfluid zu die Folie 4 damit beaufschlagende Düsen absperrt bzw. unterbricht. Durch eine Unterbrechung der Zufuhr von Behandlungsfluid 7 zu der Folie 4 durch die Abschottvorrichtung 9 und gegebenenfalls zusätzlich die Absperrklappe 11 wird der Wärmeeintrag in die Folie 4 vermindert, so dass die Zeit zwischen havariebedingter Unterbrechung bzw. Stoppen des Durchlaufs von Folie 4 und den Beginn ihres Schmelzens verlängert werden kann. Dadurch ist für den Bediener einer Anlage mehr Zeit vorhanden, einen Folienriss zu beheben und dabei gegebenfalls zu vermeiden, dass während der Reparatur die Folie zu schmelzen beginnt.

Zur rascheren Abführung der in den ersten Behandlungszonen 2 der Folienreckanlage 1 vorhanden relativ hohen Temperaturen des Behandlungsfluids 7 kann im oberen Teil der Behandlungszonen 2 zusätzlich eine Öffnung 22 zur Schnellabführung von Behandlungsfluid vorgesehen sein. Diese Öffnung 22 zur Schnellabführung ist vorzugsweise automatisch betätigbar. D. h., dass Öffnen der Öffnung 22 zur Schnellabführung von Behandlungsfluid kann in Abhängigkeit vom Unterbrechen des Foliendurchlaufs durch die Folienreckanlage gesteuert werden.

Zusätzlich sind im unteren Teil einer jeden Behandlungszone Türen 23 vorgesehen, welche manuell vom Bediener zu öffnen sind und über welche Frischluft in das Innere der Anlage gelangen kann, um die dort herrschende Temperaturen auf ein Niveau für derartige Wartungs- oder Reparaturarbeiten abzusenken, und zwar ohne dass für diese Arbeiten ausführende Personen eine Gefährdung auftritt.

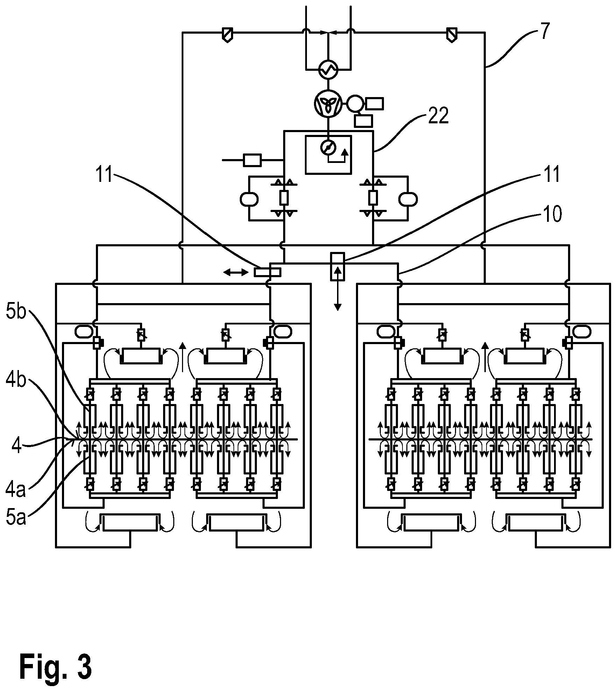

In Figur 3 ist eine Schaltungsanordnung in prinzipieller Darstellung für die Versorgung der Düsen 5 in den jeweiligen Behandlungszonen 2 mit Behandlungsfluid 7 dargestellt. Dabei sind in den jeweiligen Behandlungszonen 2 Düsen 5a, 5b zur Beaufschlagung der Folie mit Behandlungsfluid 7 sowohl im Bereich der Folienunterseite 4a als auch im Bereich der Folienoberseite 4b angeordnet. Die der Folienunterseite 4a zugeordneten Düsen bilden erste Düsen 5a, und die der Folienoberseite 4b zugeordneten Düsen bilden zweite Düsen 5b. Gemäß diesem Ausführungsbeispiel ist nun vorgesehen, dass eine Abschottvorrichtung 9 sowohl im Bereich zwischen der Folienunterseite 4a und den ersten Düsen 5a und eventuell auch im Bereich zwischen der Folienoberseite 4b und den zweiten Düsen 5b angeordnet ist, damit eine zuverlässige Abschirmung der Beaufschlagung der Folie 4 mit Behandlungsfluid 7 sowohl an ihrer Oberseite als auch an ihrer Unterseite unterbunden werden kann. Zusätzlich ist bei dem dargestellten Ausführungsbeispiel eine Absperrklappe 11 in der Zuleitung 10 für Behandlungsfluid 7 vorgesehen. Ist die in Figur 3 nicht dargestellte Abschottvorrichtung in ihrer Abschottposition, wird die Absperrklappe 11 zweckmäßigerweise zusätzlich in eine Sperrposition zur Unterbrechung der Zufuhr von Behandlungsfluid 7 gebracht, was zweckmäßigerweise automatisch erfolgt und entweder elektrisch, pneumatisch oder hydraulisch steuerbar ist.

Zusätzlich kann - wie bei dem vorliegenden Ausführungsbeispiel - in den jeweiligen Behandlungszonen 2 eine automatisch steuerbare Öffnung 22 zur Schnellabführung von Behandlungsfluid aus den jeweiligen Behandlungszonen vorgesehen sein. Wenn in einem Havariefall die Abschottvorrichtung 9 in ihre Abschottposition 9a verbracht wird bzw. verbracht worden ist, kann durch Öffnen der Öffnung 22 zur Schnellabführung von Behandlungsfluid 7 aus den Behandlungszonen 2 eine rasche Absenkung der Temperaturen in den Behandlungszonen 2 erreicht werden, so dass dem Bedienpersonal noch mehr Zeit zur Verfügung steht, einen eventuell aufgetretenen Riss beim Querrecken in der Folie 4 zu beheben, und zwar möglichst ohne dass es zum Schmelzen der Folie kommt. Zumindest soll erreicht werden, dass die Zeit zwischen dem Unterbrechen des Foliendurchlaufs und der Beseitigung eines Folienrisses bis zum Einsetzen des Schmelzens der Folie 4 verlängert wird. Dadurch erhält das Bedienpersonal also mehr Zeit zur Behebung eines Folienrisses.

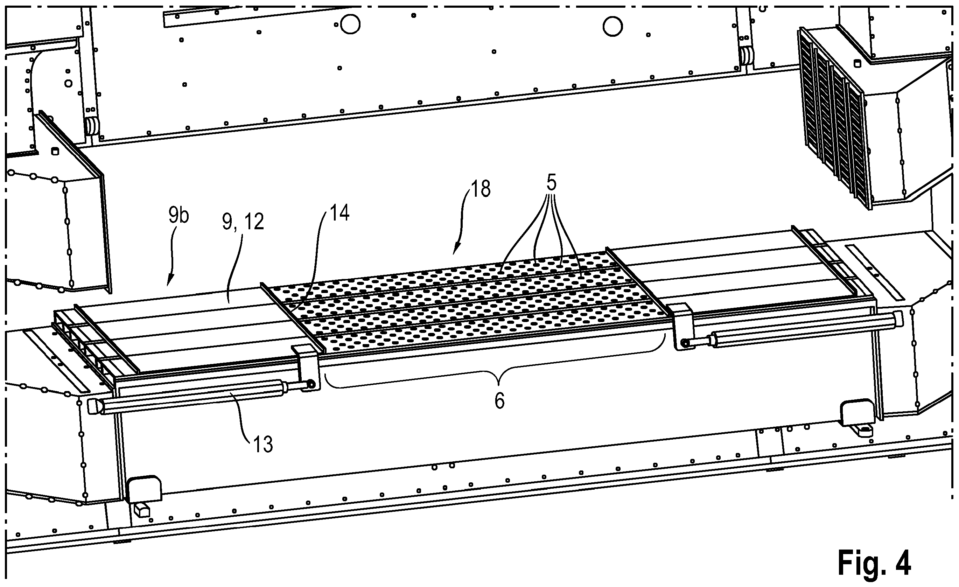

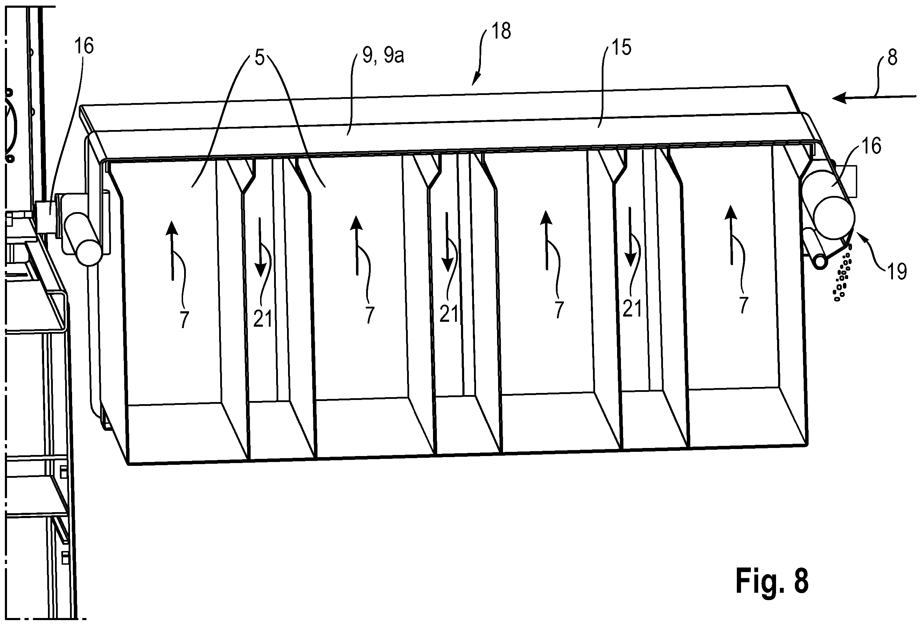

In Figur 4 ist ein Düsenblock 18 als Vierer-Düsenblock mit vier Düsen 5 dargestellt. Jede Düse 5 besteht dabei aus einem zahlreiche Bohrungen aufweisenden Lochblech, wobei sämtliche Bohrungen eines Lochbleches aus ein und derselben Quelle, welche auch als Düse bezeichnet wird, mit Behandlungsfluid beaufschlagt wird (s. im Übrigen auch Figur 8). Die Abschottvorrichtung 9 ist in Form eines als Blech 12 ausgebildeten Flächenelementes in Form von zwei Teilen ausgebildet, welche sich beide in ihrer jeweiligen Parkposition 9b befinden. Die Parkposition 9b befindet sich dabei in den Seitenbereichen des Düsenblockes, in welchen in den die einzelnen Düsen abdeckenden Lochblechen keine Bohrungen bzw. Löcher vorgesehenen sind. Die zu behandelnde Folie 4 läuft über den nicht von der Abschottvorrichtung 9 abgedeckten mittleren Bereich des Düsenblocks 18 und wird dort entsprechend mit Behandlungsfluid 7 gleichmäßig auf ihrer Unterseite beaufschlagt. Der Einfachheit halber sind auf der dazu gegenüberliegenden Seite, d. h. auf der Oberseite einer durchlaufenden Folie vorgesehene Düsen bzw. ein vorgesehener Düsenblock nicht eingezeichnet. Links und rechts sind jedoch in dem Bereich, in welchem die zweiten Düsen 5b (nicht gezeigt) in ihrem Düsenblock normalerweise angeordnet sind, die entsprechenden Anschlüsse dargestellt.

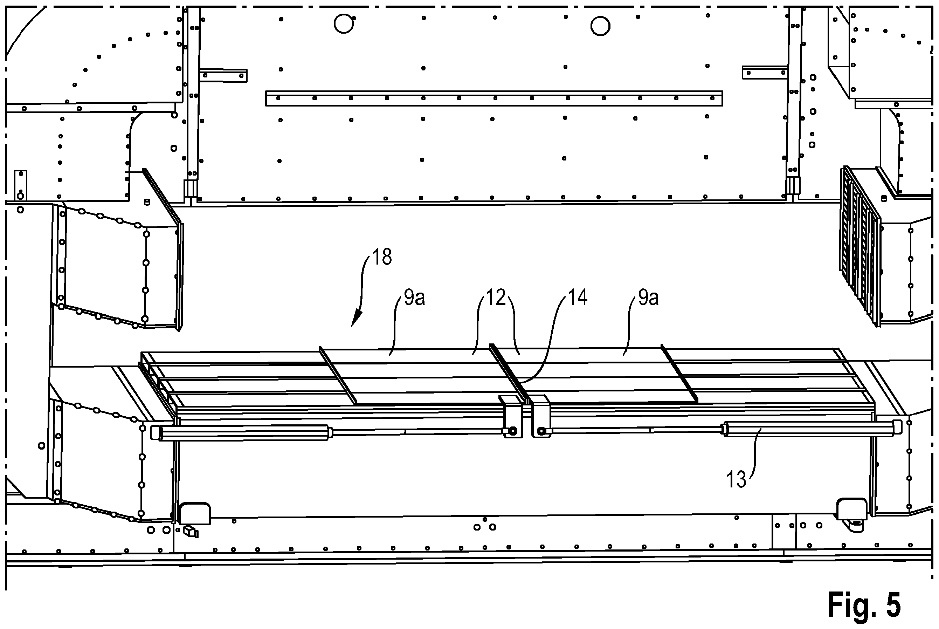

Mit Hilfe ihrer jeweiligen Antriebe 13 für das Flächenelement werden zum Zwecke des Abschottens der Beaufschlagung von Behandlungsfluid auf die Folie die jeweiligen Teile der Abschottvorrichtung 9 aus ihrer Parkposition 9b in die Abschottposition 9a bewegt, was in Figur 5 dargestellt ist.

In Figur 5 sind die beiden Teile der Abschottvorrichtung 9 durch Ausfahren der teleskopartigen Antriebe 13 soweit aufeinanderzubewegt, dass sie sich mit einer an ihren Stirnseiten angeordneten Dichtleiste 14 in der Mitte des Düsenbereiches 6 berühren. Die Dichtleiste 14 ist so ausgebildet, dass beide Teile der Abschottvorrichtung 9 sich formkongruent aneinander anschmiegen, so dass ein Entweichen von Behandlungsfluid über den Stoß der beiden Teile der Abschottvorrichtung 9 zuverlässig unterbunden werden kann. Die Antriebe 13 für das Flächenelement können elektrisch als Linearmotoren oder pneumatisch oder hydraulisch ausgebildet sein. Die an dem Düsenblock 18 jeweils außenliegenden Seitenkanten der Düsen werden von dem als Blech 12 ausgebildeten Flächenelement der Abschottvorrichtung 9 umfasst, so dass durch diese Abkantung gleichzeitig eine seitliche Führung der beiden Flächenelemente der Abschottvorrichtung bei ihrer Bewegung aus der Parkposition 9b in die Abschottvorrichtung 9a bzw. umgekehrt gewährleistet ist.

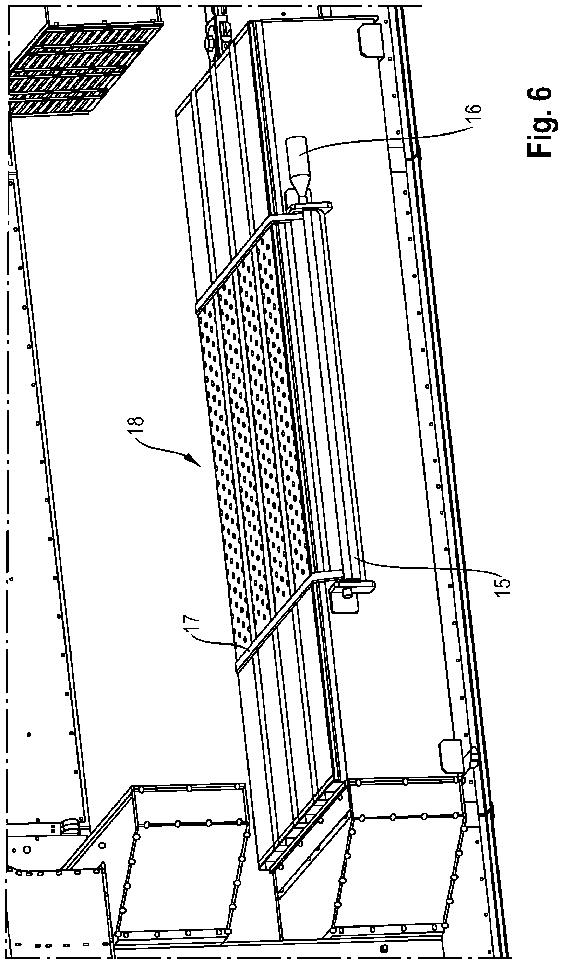

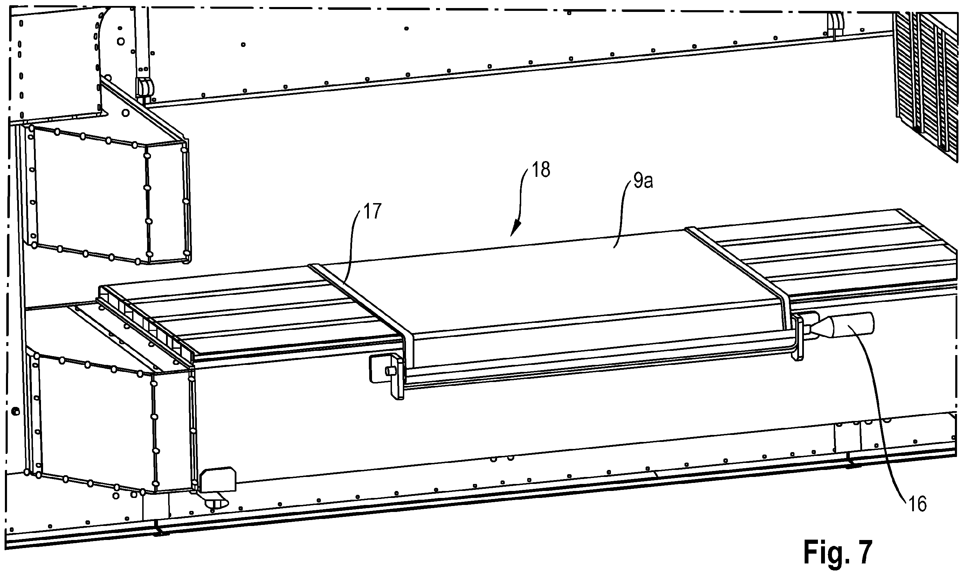

In Figur 6 ist ein weiteres Ausführungsbeispiel gemäß der Erfindung dargestellt, bei welchem ebenfalls für einen Vierer-Düsenblock anstelle eines als Blech ausgebildeten Flächenelements gemäß dem zuvor beschriebenen Ausführungsbeispiel als Abschottvorrichtung 9 ein aufgewickeltes flexibles Trägergewebe 15 oder eine entsprechend aufgewickelte Trägerfolie vorgesehen ist. Das Trägergewebe 15 bzw. die Trägerfolie sind auf einer Rolle aufgewickelt und können von dieser mittels eines Wickelantriebs 16 abgewickelt werden. In dem in Figur 6 dargestellten aufgewickelten Zustand auf der Rolle befindet sich die in Form des Trägergewebes 15 oder der Trägerfolie ausgebildete Abschottvorrichtung in ihrer Parkposition. Nach erfolgtem Abwickeln decken das Trägergewebe 15 oder die Trägerfolie den Düsenbereich 6 des Düsenblocks 18 komplett ab, d. h. die flexible Abschottvorrichtung 9 befindet sich dann in ihrer Abschottposition 9a, welche in Figur 7 dargestellt ist. Da das Trägergewebe 15 bzw. die Trägerfolie zum Zwecke des Aufwickelns flexibel sind, sind an den in Durchlaufrichtung 8 der Folie 4 vorhandenen Rändern seitliche Zug-Führungselemente 17 vorgesehen. Diese gewährleisten ein gleichmäßiges Verbringen des Trägergewebes 15 bzw. der Trägerfolie aus dem aufgewickelten Zustand (Parkposition 9b) in den abgewickelten Zustand (Abschottposition 9a), wobei die in Foliendurchlaufrichtung verlaufenden Längsränder in den seitlichen Zug-Führungselementen 17 niedergehalten werden, so dass seitlich auch kein Behandlungsfluid 7 entweichen kann.

In Figur 7 ist das Ausführungsbeispiel gemäß Figur 6 dargestellt, wobei die Abschottvorrichtung 9 gemäß diesem Ausführungsbeispiel in ihrer Abschottposition 9a dargestellt ist. In dieser im Havariefall vorgesehenen Abschottposition 9a ist das Trägergewebe 15 bzw. die Trägerfolie über den Düsenbereich 6 des Düsenblocks 18 so abgelegt bzw. von der Rolle mittels des Wickelantriebs 16 abgewickelt worden, dass der gesamte Düsenbereich 6 unter Einbeziehung der seitlichen Zug-Führungselemente 17 abgedeckt ist. Analog zu Figur 4 ist auch aus Gründen der Vereinfachung der Darstellung der Düsenblock für die zweiten Düsen oberhalb von dem dargestellten Düsenblock 18 nicht eingezeichnet.

In Figur 8 ist ein Querschnitt in räumlicher Ansicht der den Vierer-Düsenblock 18 bildenden vier Düsen 5 gemäß dem Ausführungsbeispiel nach Figur 6 und 7 gezeigt. Die Schnittebene ist dabei in Durchlaufrichtung 8 der Folie 4 gelegt. Die Abschottvorrichtung 9 befindet in ihrer Abschottposition 9a über dem Düsenbereich 6, d. h. dem Bereich, in welchem das Behandlunsfluid 7 zuführende Düsenräume vorgesehen sind. Mittels des Wickelantriebs 16 wird das Trägergewebe 15 bzw. die Trägerfolie von der links angeordneten Rolle abgezogen, so dass die den Düsenbereich 6 komplett abdeckende Abschottposition 9a erreicht wird. Sofern während des Abschottens dennoch Folie schmelzen sollte und auf die Abschottvorrichtung 9 tropfen oder fallen sollte, wird dieses abgetropfte Folienmaterial am Wickelantrieb 16 mittels einer Abstreifeinrichtung 19 von dem Trägergewebe 15 bzw. der Trägerfolie wieder entfernt, bevor dieses bzw. bevor diese wieder aufgewickelt wird. Damit ist es möglich, dass die Abschottvorrichtung 9 in Form eines Trägergewebes 15 oder Trägerfolie wiederverwendbar ist. Zwischen den einzelnen Düsen 5 sind jeweils Kanäle für Rückluft 21 vorgesehen. Wie in Figur 8 dargestellt, kann das beim Abstreifen mittels der Abstreifeinrichtung 19 entfernte geschmolzene Folienmaterial nach unten in den Gang zwischen benachbarten Düsenblöcken fallen und dort von einer Bedienperson leicht und mit geringem Zeitaufwand aus dem Bereich der Anlage entfernt werden.

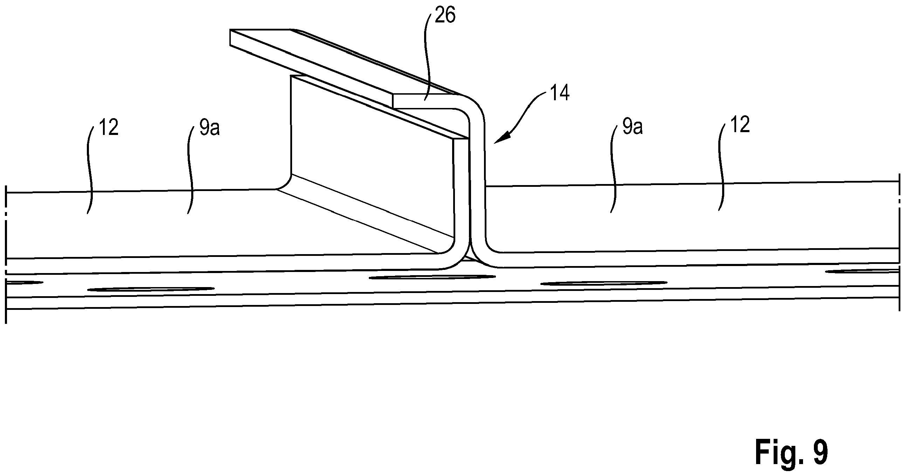

In Figur 9 ist eine Dichtleiste 14 eine Abschottvorrichtung 9 dargestellt, bei welcher deren beide Teile in Form eines als Blech ausgebildeten Flächenelementes in ihre Abschottposition 9a verbracht worden sind, so dass sich die jeweiligen Abkantungen in der Mitte im Düsenbereich 6 flächig aneinander anliegend berühren. Dadurch kann Behandlungsfluid trotz einer geteilten Abschottvorrichtung 9 nicht entweichen. Eines der beiden Teile der Abschottvorrichtung 9 weist eine zusätzliche Abkantung auf, welche sozusagen die eigentliche Dichtleiste 14 überdeckt. Diese Abkantung dient dazu, dass gegebenenfalls schmelzende Folie nicht in den Dichtbereich der Dichtleiste 14 gelangen kann und dieser dadurch gegebenenfalls verkleben könnte. Diese Überlappungsabkantung 26 dient also nicht der eigentlichen Abdichtung, wohl aber der Vermeidung von einer Verklebung der Dichtfläche durch gegebenfalls herabtropfendes geschmolzenes Folienmaterial.

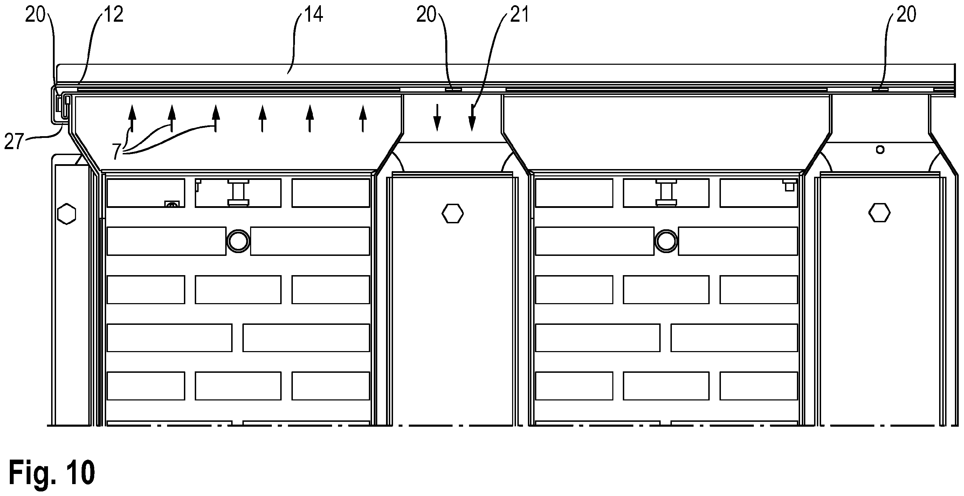

Und schließlich ist in Figur 10 eine Schnittansicht quer zur Durchlaufrichtung 8 der Folie 4 gezeigt, aus welcher die seitliche Führung 20 der Abschottvorrichtung 9 gemäß dem Ausführungsbeispiel nach Figur 4 und 5 ersichtlich ist. Dabei weist die Abschottvorrichtung an ihren jeweiligen Seiten (dargestellt ist in Figur 10 diese Führung nur auf der linken Seite) eine Umkantung 27 auf, durch welche sichergestellt ist, dass beim Verbringen des jeweiligen Teils der Abschottvorrichtung 9 aus ihrer Parkposition 9b in die Abschottposition 9a das Blech 12 der Abschottvorrichtung 9 nicht abhebt und ein zuverlässiges Unterbrechen der Beaufschlagung der Folie mit Behandlungsfluid auf ihrer Unterseite unterbunden wird. Zusätzlich weist jedes Teil der Abschottvorrichtung 9 im Bereich der Kanäle für die Rückluft 21 zwischen den jeweiligen Düsen 5 eine zusätzliche Führung 20 auf. Diese Führungen 20 dienen unter anderem dazu, dass beim Überführen der Abschottvorrichtung 9 in die Parkposition ein Verkanten und damit ein Blockieren ausgeschlossen werden kann.

### Bezuqszeichenliste

- 1: Folienreckanlage
- 2: Behandlungszonen
- 3: Querreckbereich
- 4: Folie
- 4a: Folienunterseite
- 4b: Folienoberseite
- 5: Düsen
- 5a: erste Düsen
- 5b: zweite Düsen
- 6: Düsenbereich
- 7: Behandlungsfluid
- 8: Durchlaufrichtung
- 9: Abschottvorrichtung
- 9a: Abschottposition
- 9b: Parkposition
- 10: Zuleitung
- 11: Absperrklappe
- 12: Flächenelement / Blech
- 13: Antrieb Flächenelement
- 14: Dichtleiste
- 15: Trägergewebe / Trägerfolie
- 16: Wickelantrieb
- 17: seitliches Zug-Führungselement
- 18: Düsenblock
- 19: Abstreifeinrichtung
- 20: Führung Flächenelement
- 21: Rückluft
- 22: Öffnung zur Schnellabführung
- 23: Tür
- 24: Anordnungsbereich für Abschottvorrichtungen
- 25: Frischluft
- 26: Überlappungsabkantung
- 27: Umkantung

## Patentansprüche

1. Folienreckanlage (1) mit einem Behandlungszonen (2) zum Aufheizen und/oder Verstrecken aufweisenden Querreckbereich (3), durch welchen eine zu reckende Folie (4) führbar und mittels einer aus einer Vielzahl von Düsen (5) jeweiliger Düsenbereiche (6) austretenden gasförmigen Behandlungsfluid (7), insbesondere Heizluft, derart beaufschlagbar und erwärmbar ist, dass die Folie (4) in einer Richtung quer zu ihrer Durchlaufrichtung (8) reckbar ist,
**dadurch gekennzeichnet, dass**
eine Abschottvorrichtung (9) vorgesehen ist, welche zwischen die Folie (4) und die Düsen (5) zu deren Abdeckung und/oder Abschottung der Beaufschlagung der Folie (4) mit dem Behandlungsfluid (7) führbar ist, wobei
die Abschottvorrichtung (9) aus einer Parkposition (9b), in welcher die Folie (4) mit dem Behandlungsfluid (7) beaufschlagbar ist, in eine Abschottposition (9a) bewegbar ist, in welcher durch die sich unter der Folie befindliche, auf den Düsen aufliegende oder über die Düsen der Düsenbereiche bewegbare Abschottvorrichtung (9) die Zufuhr von Behandlungsfluid (7) an die Folie (4) unterbunden und gegebenenfalls geschmolzene Folie auf der Abschottvorrichtung (9) auffangbar ist.

2. Folienreckanlage (1) nach Anspruch 1, **dadurch gekennzeichnet, dass** die Abschottvorrichtung (9) so ausgebildet ist, dass sie auf- und abwickelbar ist, wobei die Abschottvorrichtung (9) aus einem aufgewickelten Zustand in der Parkposition (9b) durch Abwickeln in die Abschottposition (9a) bringbar ist.

3. Folienreckanlage (1) nach Anspruch 1 oder 2, **dadurch gekennzeichnet, dass** die Abschottvorrichtung (9) eine Doppelanordnung aufweist, welche in ihrer Abschottposition (9a) zwischen in der jeweiligen Behandlungszone (7) unter der Folie (4) angeordneten ersten Düsen (5a) und ihrer Folienunterseite (4a) und zwischen in der jeweiligen Behandlungszone (7) oberhalb der Folie (4) angeordneten zweiten Düsen (5b) und ihrer Folienoberseite (4b) angeordnet ist.

4. Folienreckanlage (1) nach einem der Ansprüche 1 bis 3, **dadurch gekennzeichnet, dass** die Abschottvorrichtung (9) zweiteilig ausgebildet ist und die beiden Teile von beiden Seiten des jeweiligen Düsenbereichs (6) aus der Parkposition (9b) jeweils zu dessen Mitte in die Abschottposition (9a) zu dessen Abdecken und/oder Abschotten bewegbar sind.

5. Folienreckanlage (1) nach einem der Ansprüche 1 bis 4, **dadurch gekennzeichnet, dass** die Abschottvorrichtung (9) quer zur Durchlaufrichtung (8) der Folie (4) in ihre Abschottposition (9a) bewegbar ist.

6. Folienreckanlage (1) nach einem der Ansprüche 1 bis 4, **dadurch gekennzeichnet, dass** die Abschottvorrichtung (9) längs zur Durchlaufrichtung (8) der Folie (4) in ihre Abschottposition (9a) bewegbar ist.

7. Folienreckanlage (1) nach einem der Ansprüche 1 bis 6, **dadurch gekennzeichnet, dass** die Abschottvorrichtung (9) auf Basis eines einer Anlagenhavarie oder eines Anlagenstopps entsprechenden Signals automatisch in ihre Abschottposition (9a) bewegbar ist.

8. Folienreckanlage (1) nach Anspruch 7, **dadurch gekennzeichnet, dass** das Behandlungsfluid (7) mittels einer Zuleitung (10) den Düsen (4) zuführbar ist und in der Zuleitung (10) eine Absperrklappe (11) angeordnet ist, welche auf Basis des Signals in ihrer Sperrposition die Zufuhr des Behandlungsfluids (7) unterbricht.

9. Folienreckanlage (1) nach einem der Ansprüche 1 bis 8, **dadurch gekennzeichnet, dass** die Abschottvorrichtung (9) als Flächenelement, insbesondere aus Blech, insbesondere aus Stahlblech, ausgebildet ist.

10. Folienreckanlage (1) nach einem der Ansprüche 1 bis 9, **dadurch gekennzeichnet, dass** die Abschottvorrichtung (9) zumindest im Bereich des Foliendurchlaufs an ihren Bauteiloberflächen eine glatte, Antihafteigenschaften aufweisende Beschichtung aufweist, an welcher gegebenenfalls geschmolzene Folie allenfalls gering haftet.

11. Folienreckanlage (1) nach einem der Ansprüche 1 bis 8, **dadurch gekennzeichnet, dass** die Abschottvorrichtung (9) ein Trägergewebe (15) oder eine wärmebeständige Trägerfolie ist, deren Schmelzpunkt über dem Schmelzpunkt der Folie liegt.

12. Folienreckanlage (1) nach Anspruch 11, **dadurch gekennzeichnet, dass** das Trägergewebe (15) oder die Trägerfolie während ihres Aufwickelns in die Parkposition (9b) mittels einer Abstreifvorrichtung (19) von gegebenenfalls vom Trägergewebe (15) oder von der Trägerfolie aufgenommener geschmolzener Folie abreinigbar ist.

13. Folienreckanlage (1) nach einem der Ansprüche 1 bis 12, **dadurch gekennzeichnet, dass** die Abschottvorrichtung (9) mittels gesteuerter Antriebe (13, 16) in ihre jeweilige Position bewegbar ist.

14. Folienreckanlage (1) nach einem der Ansprüche 8 bis 13, **dadurch gekennzeichnet, dass** die Behandlungszonen (2) jeweils zumindest eine Öffnung (22) zur Schnellabführung des Behandlungsfluids (7) aufweisen, welche auf Basis des Signals aus einem geschlossenen Zustand in einen geöffneten Zustand bringbar ist.

15. Verfahren zum Verhindern von Verschmutzungen, insbesondere von Düsenbereichen (6) für Behandlungsfluid (7) von Folien (4), in Folienreckanlagen (1) infolge Schmelzens der Folie (4), **dadurch gekennzeichnet, dass** bei Stillstand der Folienreckanlage (1) die Düsenbereiche (6) so abgedeckt werden, dass die Folien (4) zumindest an ihrer Unterseite (4a) nicht mit Behandlungsfluid (7) aus Düsen (5) der Düsenbereiche (6) beaufschlagt werden.

## Claims

1. Film stretching machine (1) with a transverse stretching region (3) comprising treatment zones (2) for heating and/or stretching, through which transverse stretching region a film (4) to be stretched is guidable, and is subjectable and warmable by means of a gaseous treatment fluid (7), particularly heating air, that exits out of a plurality of nozzles (5) of respective nozzle regions (6), in such a manner that the film (4) is stretchable in a direction transverse to its transit direction (8),
**characterized in that**
a partitioning apparatus (9) is provided, which is guidable between the film (4) and the nozzles (5) for their covering and/or partitioning of subjecting the film (4) with the treatment fluid (7), wherein
the partitioning apparatus (9) is movable out of a parking position (9b), in which the film (4) is subjectable with the treatment fluid (7), into a partitioning position (9a), in which the flowing of the treatment fluid (7) onto the film (4) is prevented by the partitioning apparatus (9) arranged below the film (4), resting onto the nozzles or being movable over the nozzles (5) of the nozzle regions, and possibly molten film is catchable thereon.

2. Film stretching machine (1) according to claim 1, **characterized in that** the partitioning apparatus (9) is embodied such that it can be wound-up and unwound, wherein the partitioning apparatus (9) can be brought out of a wound-up condition in the parking position (9b) into the partitioning position (9a) by unwinding.

3. Film stretching machine (1) according to claim 1 or 2, **characterized in that** the partitioning apparatus (9) comprises a double arrangement, which, in its partitioning position (9a), is arranged between first nozzles (5a) arranged under the film (4) in the respective treatment zone (7) and a film bottom surface (4a) of the film, and between second nozzles (5b) arranged above the film (4) in the respective treatment zone (7) and a film top surface (4b) of the film.

4. Film stretching machine (1) according to one of the claims 1 to 3, **characterized in that** the partitioning apparatus (9) is embodied in a two-part manner, and the two parts each are movable from both sides of the respective nozzle region (6) out of the parking position (9b) to the middle thereof into the partitioning position (9a) for its covering and/or partitioning.

5. Film stretching machine (1) according to one of the claims 1 to 4, **characterized in that** the partitioning apparatus (9) is movable into its partitioning position (9a) transversely to the transit direction (8) of the film (4).

6. Film stretching machine (1) according to one of the claims 1 to 4, **characterized in that** the partitioning apparatus (9) is movable into its partitioning position (9a) longitudinally along the transit direction (8) of the film (4) .

7. Film stretching machine (1) according to one of the claims 1 to 6, **characterized in that** the partitioning apparatus (9) is automatically movable into its partitioning position (9a) based on a signal corresponding to a machine breakdown or a machine stop.

8. Film stretching machine (1) according to claim 7, **characterized in that** the treatment fluid (7) is suppliable to the nozzles (4) by means of a supply line (10), and a shut-off flap (11) is arranged in the supply line (10), which shut-off flap in its shut-off position, based on the signal, interrupts the supply of the treatment fluid (7).

9. Film stretching machine (1) according to one of the claims 1 to 8, **characterized in that** the partitioning apparatus (9) is embodied as an elementary area, especially of metal sheet, especially of steel sheet.

10. Film stretching machine (1) according to one of the claims 1 to 9, **characterized in that** the partitioning apparatus (9), at least in the region of the film transit on its component surfaces, comprises a smooth coating that comprises anti-adhesion characteristics, on which, if applicable, molten film at most only slightly adheres.

11. Film stretching machine (1) according to one of the claims 1 to 8, **characterized in that** the partitioning apparatus (9) is a carrier fabric (15) or a heat-resistant carrier film, the melting point of which lies above the melting point of the film.

12. Film stretching machine (1) according to claim 11, **characterized in that** the carrier fabric (15) or the carrier film, during its winding-up into the parking position (9b) is cleanable by means of a stripping apparatus (19) of any, if applicable, molten film taken up by the carrier fabric (15) or by the carrier film.

13. Film stretching machine (1) according to one of the claims 1 to 12, **characterized in that** the partitioning apparatus (9) is movable into its respective position by means of controlled drives (13, 16).

14. Film stretching machine (1) according to one of the claims 8 to 13, **characterized in that** the treatment zones (2) each comprise at least one opening (22) for the rapid discharge of the treatment fluid (7), which can be brought out of a closed state into an opened state based on the signal.

15. Method for preventing contaminations, especially of nozzle regions (6) for treatment fluid (7) of films (4), in film stretching machines (1) due to melting of the film (4), **characterized in that**, in a standstill of the film stretching machine (1) the nozzle regions (6) are covered in such a manner that the films (4) are not subjected to with treatment fluid (7) from nozzles (5) of the nozzle regions (6) at least on its film bottom surface (4a).

## Revendications

1. Installation d'étirage de films (1) avec une zone d'étirage transversal (3) présentant des zones de traitement (2) pour le réchauffage et/ou l'étirage, à travers laquelle un film (4) à étirer peut être guidé et peut être soumis à et chauffé au moyen d'un fluide de traitement gazeux (7), notamment d'air chaud, provenant d'une multitude de buses (5) de zones de buses respectives (6), de telle sorte que le film (4) peut être étiré dans une direction transversale à sa direction de passage (8),
**caractérisée en ce que**
ladite installation prévoit un dispositif de séparation (9) pouvant être guidé entre le film (4) et les buses (5) afin de les recouvrir et/ou d'isoler l'application du fluide de traitement (7) sur le film (4),
le dispositif de séparation (9) pouvant être déplacé d'une position d'arrêt (9b), dans laquelle le film (4) peut être soumis au fluide de traitement (7), à une position de séparation (9a), dans laquelle l'alimentation en fluide de traitement (7) jusqu'au film (4) est empêchée par le dispositif de séparation (9) se trouvant sous le film, situé au-dessus des buses ou pouvant être déplacé sur les buses des zones de buses, et, le cas échéant, le film fondu pouvant être recueilli sur le dispositif de séparation (9).

2. Installation d'étirage de films (1) selon la revendication 1, **caractérisée en ce que** le dispositif de séparation (9) est conçu de manière à pouvoir être enroulé et déroulé, le dispositif de séparation (9) pouvant être amené d'un état enroulé dans la position d'arrêt (9b) à la position de séparation (9a) par déroulement.

3. Installation d'étirage de films (1) selon la revendication 1 ou 2, **caractérisée en ce que** le dispositif de séparation (9) comprend un double agencement disposé, dans sa position de séparation (9a), entre de premières buses (5a) disposées sous le film (4) dans la zone de traitement respective (7) et sa face inférieure du film (4a) et entre de secondes buses (5b) disposées dans la zone de traitement respective (7) au-dessus du film (4) et de sa face supérieure du film (4b).

4. Installation d'étirage de films (1) selon l'une des revendications 1 à 3, **caractérisée en ce que** le dispositif de séparation (9) est formé de deux parties et **en ce que** les deux parties peuvent être déplacées des deux côtés de la zone de buses respective (6) de la position d'arrêt (9b) à chaque fois vers le centre de celle-ci dans la position de séparation (9a) pour la recouvrir et/ou l'isoler.

5. Installation d'étirage de films (1) selon l'une des revendications 1 à 4, **caractérisée en ce que** le dispositif de séparation (9) peut être déplacé transversalement au sens de passage (8) du film (4) jusqu'à sa position de séparation (9a).

6. Installation d'étirage de films (1) selon l'une des revendications 1 à 4, **caractérisée en ce que** le dispositif de séparation (9) peut être déplacé longitudinalement au sens de passage (8) du film (4) jusqu'à sa position de séparation (9a).

7. Installation d'étirage de films (1) selon l'une des revendications 1 à 6, **caractérisée en ce que** le dispositif de séparation (9) peut être automatiquement déplacé dans sa position de séparation (9a) au déclenchement d'un signal correspondant à une panne ou à un arrêt de l'installation.

8. Installation d'étirage de films (1) selon la revendication 7, **caractérisée en ce que** le fluide de traitement (7) peut être transporté jusqu'aux buses (4) au moyen d'une conduite d'alimentation (10) dans laquelle est disposé un clapet de fermeture (11) qui interrompt l'alimentation en fluide de traitement (7) au déclenchement du signal dans sa position de blocage.

9. Installation d'étirage de films (1) selon l'une des revendications 1 à 8, **caractérisée en ce que** le dispositif de séparation (9) est conçu sous la forme d'un élément plat, notamment en tôle, et plus particulièrement en tôle d'acier.

10. Installation d'étirage de films (1) selon l'une des revendications 1 à 9, **caractérisée en ce que** le dispositif de séparation (9) présente, au moins dans la zone de passage du film, un revêtement lisse aux propriétés anti-adhérentes à la surface de ses pièces, auquel, le cas échéant, le film fondu adhère tout au plus légèrement.

11. Installation d'étirage de films (1) selon l'une des revendications 1 à 8, **caractérisée en ce que** le dispositif de séparation (9) est un tissu de support (15) ou un film de support thermorésistant dont le point de fusion est supérieur au point de fusion du film.

12. Installation d'étirage de films (1) selon la revendication 11, **caractérisée en ce que** le tissu de support (15) ou le film de support peut être débarrassé, lors de son enroulement jusqu'à la position d'arrêt (9b), du film fondu éventuellement recueilli par le tissu de support (15) ou le film de support, au moyen d'un dispositif de raclage (19).

13. Installation d'étirage de films (1) selon l'une des revendications 1 à 12, **caractérisée en ce que** le dispositif de séparation (9) peut être déplacé dans sa position respective au moyen de mécanismes d'entraînement commandés (13, 16).

14. Installation d'étirage de films (1) selon l'une des revendications 8 à 13, **caractérisée en ce que** les zones de traitement (2) présentent chacune au moins une ouverture (22) destinée à l'évacuation rapide du fluide de traitement (7), ladite ouverture pouvant être amenée d'un état fermé à un état ouvert au déclenchement du signal.

15. Procédé permettant d'empêcher les salissures, en particulier des zones de buses (6) pour le fluide de traitement (7) de films (4) dans des installations d'étirage de films, dues à la fusion du film (4), **caractérisé en ce que**, une fois l'installation d'étirage de films (1) à l'arrêt, les zones de buses (6) sont recouvertes de telle sorte que les films (4), au moins sur leur face inférieure (4a), ne sont pas soumis au liquide de traitement (7) provenant des buses (5) des zones de buses (6).
